# EUROPÄISCHE PATENTANMELDUNG

(11) **EP 1 323 591 A2**
(43) Veröffentlichungstag der Anmeldung: **02.07.2003**
(21) Anmeldenummer: 02025999.0
(22) Anmeldetag: 21.11.2002
(51) Int. Cl.: B60R 21/00

(54) **Verfahren zur Überwachung des Innenraums eines Fahrzeugs, sowie ein Fahrzeug mit mindestens einer Kamera im Fahrzeuginnenraum**

(30) Priorität: 29.11.2001 DE 10158415
(71) Anmelder: DaimlerChrysler AG, 70567 Stuttgart (DE)
(72) Erfinder: Fritzsche, Martin, 88400 Biberach (DE); Löhlein, Otto, 89171 Illerkirchberg (DE); Stein, Fridtjof, 73760 Ostfildern (DE); Würz-Wessel, Alexander, 73084 Salach (DE)

(57) **Zusammenfassung**

Die Erfindung betrifft ein Verfahren zur optischen Überwachung des Innenraums eines Fahrzeugs, bei dem der Fahrzeuginnenraum mittels mindestens einer Rundumsichtkamera (2; 4) beobachtet wird, welche Bilder in krummlinigen Koordinaten liefert, bei dem die von der Rundumsichtkamera (2; 4) erhaltenen Bilder auf zylindrische oder ebene Koordinaten transformiert werden (6) und bei dem die transformierten Bilder einer elektronischen Bildauswertung (8) unterzogen werden. Die Erfindung ermöglicht es, mit einer einzigen Kamera mehrere verschiedene Überwachungsfunktionen sowohl im Innenraum als auch im Außenraums des Fahrzeugs durchzuführen.

## Beschreibung

Die Erfindung betrifft ein Verfahren zur optischen Überwachung des Innenraums eines Fahrzeugs sowie ein Fahrzeug mit mindestens einer Kamera im Fahrzeuginnenraum.

Kraftfahrzeuge mit einer Kamera im Fahrzeuginnenraum sind bekannt. Zum Beispiel kann man einzelne Kameras mit Sichtfeld nach außen zur Vor-, Seiten- bzw. Rückraumüberwachung durch die Scheiben des Fahrzeugs hindurch verwenden. Es wurden auch schon Kameras zur Beobachtung von Teilen des Fahrzeuginnenraums vorgeschlagen, etwa in der DE-A-198 03 158, die eine Vorrichtung zur optischen Vigilanzzustandsbestimmung der Bedienperson eines Fahrzeugs zeigt.

Der Erfindung liegt die Aufgabe zugrunde, ein Kamerasystem für den Innenraum eines Fahrzeug zu schaffen, das für mehrere verschiedene Überwachungsfunktionen gleichzeitig und zusätzlich in verschiedenen weiteren Funktionen verwendet werden kann.

Diese Aufgabe wird gemäß der Erfindung durch ein Verfahren nach Anspruch 1 bzw. ein Fahrzeug nach Anspruch 10 gelöst.

Gemäß der Erfindung wird der Fahrzeuginnenraum mittels mindestens einer Rundumsichtkamera beobachtet, die in der bevorzugten Ausführungsform aus einer konventionellen digitalen Kamera und einem z.B. kugel- oder parabolförmigen konvexen Spiegel besteht, der wiederum von der Kamera beobachtet wird.

Derartige Rundumsichtkamera sind z.B. in den PCT-Veröffentlichungen Nr. WO-9930197, WO-9945422 und WO-9743854 beschrieben und werden z.B. für Überwachungszwecke und bei der Roboternavigation eingesetzt. Sie erzeugen 360°-Rundumbilder ähnlich wie eine Fischaugenkamera. Anders als Fischaugenkameras, die am Aufnahmehorizont, d.h. am Rande ihres azimutalen Aufnahmebereiches von maximal 180°, praktisch keine Details mehr erkennen lassen, geben Rundumsichtkameras auch in Randbereichen eines Bildes noch Details wieder und ermöglichen sogar azimutale Aufnahmebereiche von mehr als 180°.

Bei geeigneter Anordnung der Rundumsichtkamera kann ein sehr großer Teil des Fahrzeuginnenraums auf einmal erfasst werden, z.B. bei Anbringung des konvexen Spiegels innen am Fahrzeugdach die ganze darunter liegende Hemisphäre. Gleichwohl ist es auch denkbar den konvexen Spiegel in der Amaturentafel zu integrieren, insbesondere wenn vornehmlich der vordere Bereich des Fahrgastraumes erfasst werden soll.

Da die erhaltenen Bilder stark verzerrt sind, d.h. in irgendwelchen krummlinigen "Weltkoordinaten" vorliegen, werden daraus ein oder mehrere unverzerrte Teilbilder erzeugt, indem die Bilder der Kamera auf zylindrische oder ebene Koordinaten transformiert werden. Die Beziehung zwischen dem krummlinigen Koordinatensystem der Kamerabilder und dem zylindrischen oder ebenen Ziel-Koordinatensystem ist durch die Spiegelgeometrie und die Anordnung von Spiegel und Kamera festgelegt. Bei der Transformation werden die Helligkeits- und ggf. Farbwerte jedes Bildpunktes eines Kamerabildes einem Punkt in einem zylindrischen oder ebenen Koordinatensystem zugeordnet, dessen Koordinaten sich z.B. im Falle eines Kugelspiegels aus trigonometrischen Beziehungen ergeben.

Die entsprechenden Berechnungen können im Prinzip in Echtzeit in einem Rechner im Fahrzeug durchgeführt werden; um Rechenleistung zu sparen, wird die beschriebene Zuordnung in der Praxis aber vorzugsweise anhand von einer oder mehreren Transformationstabellen durchgeführt, die im Rahmen einer Kamerakalibrierung erstellt und zur Verwendung während des Kamerabetriebs in einem Bordrechner oder einer festverdrahteten Bildentzerrungselektronik gespeichert werden.

Auf diese Weise erhält man ein oder mehrere Teilbilder des Fahrzeuginnenraums, bei denen nur noch eine eindimensionale Verzerrung (im Falle einer Transformation auf Zylinderkoordinaten) bzw. (im Falle einer Transformation auf ebene Koordinaten) überhaupt keine Verzerrung mehr vorliegt, so dass gerade Linien als gerade Linien wiedergegeben werden. Solche Bilder in zylindrischen oder ebenen Koordinaten können dann elektronisch weiterverarbeitet werden, insbesondere ausgewertet werden.

Bei dem erfindungsgemäßen Verfahren werden die transformierten Bilder zumindest einer Bildauswertung zur Erkennung von Objekten im Fahrzeuginnenraum unterzogen, wobei die zu erkennenden Objekte z.B. Personen sei können. Dies ermöglicht eine einfache Bestimmung der Anzahl und jeweiligen Sitzpositionen von Fahrzeuginsassen auf den Vorder- und Rücksitzen. Diese Informationen können vorteilhaft zur automatischen Einstellung von Betriebsparametern des Fahrzeugs verwendet werden. Zum Beispiel kann der Beifahrer-Airbag deaktiviert werden, wenn der Beifahrersitz frei ist, damit im Falle eines Unfalls die Instandsetzungskosten niedrig bleiben. Auf konventionelle Weise ist eine solche Sitzbelegungserkennung nur mit einigem Aufwand zu realisieren, da bisher jeder Sitz mit einem entsprechenden Sensor ausgestattet werden muss.

Überdies ermöglicht die Erfindung, nicht nur die Anwesenheit von Personen auf den einzelnen Fahrzeugsitzen, sondern auch deren Sitzhaltung zu erkennen. Eine Sitzhaltungserkennung von Personen im Fahrzeug zusätzlich zu einer reinen Sitzbelegungserkennung ermöglicht es zum Beispiel, Sicherheitssysteme noch situationsangepasster automatisch aktivieren bzw. deaktivieren zu können. Beispielsweise kann der Beifahrer-Airbag vorbeugend automatisch deaktiviert werden, wenn ein Beifahrer ungünstigerweise seine Füße auf das Armaturenbrett legt, oder es können, gegebenenfalls in Abhängigkeit von weiteren Parametern wie Fahrzeuggeschwindigkeit und Abstand von einem vorausfahrenden Fahrzeug, die von irgendeinen Fahrerassistenzsystem nachgewiesen werden, ein Warnsignal gegeben oder ein Gurtstraffer aktiviert werden, falls jemand während der Fahrt eine ungünstige Haltung einnimmt, etwa eine weit nach vorne geneigte Sitzhaltung.

Die Größe von Fahrzeuginsassen und/oder Gegenstände im Fahrzeug können ebenfalls erfasst werden. Wird z.B. ein Kleinkind auf dem Beifahrersitz oder ein dort vorhandener Kindersitz oder ein Kindersitz auf einem Rücksitz erkannt, kann mit dieser Kenntnis der entsprechende Airbag automatisch deaktiviert werden. Nicht angelegte Sicherheitsgurte können ebenfalls erkannt werden.

Als Kamera kann man z.B. eine CCD-Kamera verwenden. Bereits relativ einfache CCD-Kameras haben eine genügende Auflösung, um Objekte zumindest im Nahbereich außerhalb des Fahrzeugs erkennen zu können, wenn sie in das Blickfeld der Scheiben gelangen. Dies ermöglicht Anwendungen der Erfindung bei einem Parkhilfesystem oder zur automatischen Hinderniserkennung. Beispielsweise kann der Fahrer automatisch gewarnt werden, wenn er Anstalten zur Fahrtrichtungsänderung trifft und gleichzeitig mit Hilfe der Erfindung erkannt wird, dass sich ein Zweiradfahrer neben dem Fahrzeug befindet.

Für eine gleichzeitige Beobachtung des Außenraums auch in Fahrtrichtung ist es günstig, wenn die Kamera möglichst weit vorne im Fahrzeug angebracht ist, beispielsweise nahe hinter der Windschutzscheibe. Dies geht möglicherweise auf Kosten der Sichtbarkeit von Fahrzeuginsassen auf der Rückbank. Je nachdem, welche Überwachungsaufgaben im Einzelfall im Vordergrund stehen, wird man die Kamera daher unterschiedlich auslegen und anbringen. Gegebenenfalls kann man auch mehrere Kameras verwenden, z.B. eine Kamera, die den Außenraum in Fahrtrichtung sowie Insassen auf den Vordersitzen erfasst, und eine weitere Kamera, die die Seiten- und Rückräume sowie Insassen auf den Rücksitzen erfasst.

Die mit relativ wenig Aufwand erreichbare Auflösung z.B. von CCD-Kameras ermöglicht viele weitere Anwendungen im Rahmen von Fahrerassistenzsystemen, etwa eine automatische Blickrichtungserkennung des Fahrers z.B. bei einem System zur Überwachung des Aufmerksamkeitszustandes des Fahrers.

Noch eine vorteilhafte Anwendung der Erfindung ist, im Falle eines Fahrzeugunfalls mindestens eines der transformierten Bilder oder aus der Bildsignalverarbeitung extrahierte Informationen automatisch zu speichern und/oder per Funk an eine Rettungsleitstelle zu übertragen, um eine sogenannte Postcrash-Analyse z.B. für selektive Notfallhilfe zu ermöglichen. Zu den aus der Bildsignalverarbeitung extrahierten Informationen zählen beispielsweise die Anzahl der Insassen, deren Gesundheitszustand, eine Crash-Analyse, Deformationen am Fahrzeug, Unfallort oder Unfallschwere.

Weitere vorteilhafte Anwendungsmöglichkeiten der Erfindung bestehen zum Beispiel als Einbruchschutz (eine das abgestellte Fahrzeug betretende Person, die sich nicht authentifiziert hat, wird als Einbrecher angesehen), zur Unterstützung einer automatischen Klimaregelung durch Erkennung des Sonnenstandes bzw. durch Erkennung, ob Fahrzeuginsassen eher leicht oder wärmer bekleidet sind, sowie zur Einsparung einer gesonderten Kamera bei Bildtelefonie, indem ein geeignet transformiertes Bild des jeweiligen Gesprächsteilnehmers erzeugt und gesendet wird.

Anders als konventionelle optische Erfassungssysteme für Fahrzeuge, die jeweils eine eigene, speziell ausgerichtete Kamera benötigen, ermöglicht die Erfindung die Durchführung einer Vielzahl von Aufgaben mit nur einer oder nur sehr wenigen Kameras.

Besonders viele Anwendungsmöglichkeiten der Erfindung gibt es in Kraftfahrzeugen, jedoch kann die Erfindung auch für andere Fahrzeuge vorteilhaft sein, beispielsweise für Überwachungsaufgaben in Flugzeugen.

Weitere Merkmale und Vorteile der Erfindung ergeben sich aus den Unteransprüchen und aus der folgenden Beschreibung von Ausführungsbeispielen anhand der Zeichnung. Darin zeigen:
Fig. 1 eine Prinzipskizze einer Vorrichtung zur optischen Überwachung des Innenraums eines Fahrzeug,
Fig. 2 eine Prinzipskizze des Fahrzeuginnenraums, wie ihn die Kamera in Fig. 1 sieht,
Fig. 3 ein entzerrtes Teilbild der Fahrerseite des Fahrzeuginnenraums, und
Fig. 4 zeigt eine alternative Anordnung von Kamera und Spiegeln.

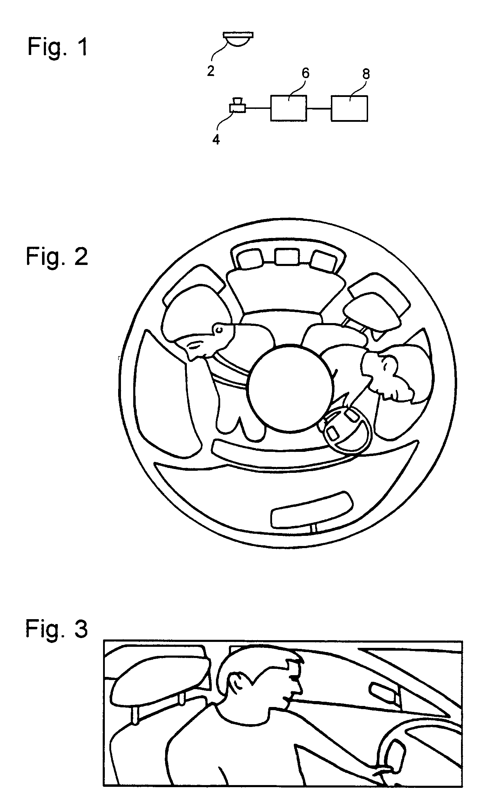

Fig. 1 zeigt einen kugel- oder parabolförmigen konvexen Spiegel 2 und eine auf den Spiegel 2 ausgerichtete digitale Kamera 4, die zusammen eine Rundumsichtkamera bilden, wie sie z.B. in den genannten Druckschriften WO-9930197, WO-9945422 und WO-9743854 beschrieben ist. Der konvexe Spiegel 2 ist in diesem Beispiel zwischen den Vordersitzen am Dach eines Kraftfahrzeugs angebracht, wobei seine Spiegelfläche nach unten weist, und die Kamera 4 ist in einem gewissen Abstand senkrecht darunter angebracht, wobei sie entweder ebenfalls am Dach befestigt oder in einer Mittelkonsole zwischen den Vordersitzen eingebaut ist.

Bei dieser Anordnung sieht die Kamera 4 im konvexen Spiegel 2 ein Bild der Hemisphäre unter dem Wagendach, wie es schematisch in Fig. 2 dargestellt ist, mit Ausnahme eines mechanisch oder elektronisch ausgeblendeten zentralen Bereichs, in dem sie sich selbst abbilden würde. Wie man sieht, erfasst die Kamera nicht nur alle Sitze und alle Fahrzeuginsassen (in diesem Beispiel zwei), sondern vermag auch durch die Fahrzeugscheiben hindurch nach außen zu blicken, wobei irgendwelche Details des Außenraums in Fig. 2 nicht dargestellt sind.

Die in regelmäßigen Abständen von der Kamera 4 gelieferten Bilder sind stark verzerrt, da sie die Umgebung je nach der Form des Spiegels 2 in kugel- oder irgendwelchen anderen krummlinigen Koordinaten abbildet. Jedes Bild der Kamera 4 wird einer Entzerrungseinrichtung 6 zugeführt, in der ein oder mehrere Teile des Bildes auf ebene Koordinaten transformiert werden. Für die Fahrerseite erhält man dann ein Bild, wie es in Fig. 3 dargestellt ist. Das heißt, man erhält ein unverzerrtes Bild, in dem gerade Linien auch als gerade Linien wiedergegeben werden.

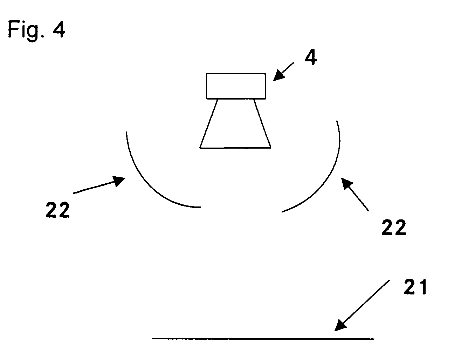

In Fig. 4 ist eine alternative Anordnung von Kamera 4 und Spiegeln 21 und 22 aufgezeigt. Eine solche Anordnung ermöglicht es die Kamera im Dachhimmel zu integrieren in deren Sichtfeld sich ein Spiegel 21 befindet. Ist die Kamera 4 von einem oder mehreren konvexen Spiegeln 22 umgeben kann auch auf diese weise im wesentlichen der selbe Bereich durch die Kamera 4 erfasst werden , welcher auch mittels der in Fig.1 aufgezeigten Anordnung erfasst werden kann. In vorteilhafter Weise wird bei dieser Anordnung der Spiegel 21 ebenfalls konkav ausgeführt.

Die Transformation in der Entzerrungseinrichtung 6 wird z.B. durchgeführt, indem Helligkeits- und ggf. Farbwerte jedes Bildpunktes eines Kamerabildes einem Punkt in einem ebenen Koordinatensystem zugeordnet werden, dessen Koordinaten sich z.B. aus trigonometrischen Beziehungen ergeben, die aus der Spiegelgeometrie und der Anordnung von Spiegel und Kamera errechnet werden können. Für leichtere Berechenbarkeit des nötigen Transformationsverhaltens der Entzerrungseinrichtung 6 wird ein kugel- oder parabolförmiger Spiegel 2 bevorzugt, jedoch kann im Prinzip auch irgendein anderer konvexer Spiegel 2 verwendet werden.

Um die Transformation im laufenden Betrieb auf einfache Weise schnell durchführen zu können, werden bei der Installation der Rundumsichtkamera eine oder mehrere Transformationstabellen erstellt und gespeichert, anhand derer die Entzerrungseinrichtung 6 in der Folge die Transformation durchführt.

Dies kann z.B. dadurch geschehen, dass man empirisch eine zweidimensionale Transformationsfunktion mit mehreren veränderlichen Parametern aufstellt, die den Abbildungseigenschaften von Spiegel 2 und Kamera 4 am ehesten entspricht, im Fahrzeuginnenraum mehrere gerade Kalibrierungsmaßstäbe anbringt (beispielsweise das Anbringung bzw. Aufbringung eines Schachbrettmusters im Sichtfeld der Kamera) und mit Hilfe von Kalibrierungssoftware die Parameter so einstellt, dass das von der Entzerrungseinrichtung 6 gelieferte Bild die Kalibrierungsmaßstäbe möglichst gerade und in den richtigen Maßstäben und Winkeln zueinander wiedergibt. Bildfehler und Linearfehler aufgrund von ungenauer Ausrichtung von Kamera 4 und Spiegel 2 werden bei der Kalibrierung durch Zentrieren des ausgeblendeten Bereiches (zentraler Bereich in Fig. 2) ausgeglichen. Aufgrund der so erhaltenen Transformationsfunktion werden dann die Transformationstabellen erstellt, die zu der gewünschten Transformation führen.

Die von der Entzerrungseinrichtung 6 gelieferten transformierten Bilder werden einer Einrichtung 8 zur Sitzbelegungserkennung zugeführt, in der sie jeweils einer elektronischen Bildauswertung zur Erkennung von Personen auf den einzelnen Sitzen im Fahrzeuginnenraum unterzogen werden, zum Beispiel anhand der in den Bildern vorhandenen Kanten.

Zusätzlich oder alternativ können die transformierten Bilder weiterentwickelteren oder andersartigen Überwachungs- oder Fahrerassistenzsystemen zugeführt werden, etwa einer Einrichtung zur Erkennung der Größe und Haltung von Personen auf den einzelnen Sitzen, einer Einrichtung zur Gurtführungserkennung, einer Einrichtung zur Blickrichtungserkennung, einem Bildspeicher und/oder -sender, einer Einbruchsmeldeeinrichtung, einem Klimaregelungssystem und/oder einem Bildtelefonsystem.

Transformierte Teilbilder, die jeweils den durch die Scheiben hindurch sichtbaren Vor-, Seiten- und Rückräumen des Fahrzeugs entsprechen, werden Systemen wie z.B. einem System zur Vorraumüberwachung (z.B. zur automatischen Spurfolgeführung oder Kollisionswarnung), einem System zur Seitenraumüberwachung (z.B. ebenfalls zur Kollisionswarnung) bzw. einem Parkhilfesystem zugeführt.

In dem oben beschriebenen Beispiel werden die von der Kamera 4 gelieferten Bilder auf ebene Koordinaten transformiert, wie in Fig. 3 gezeigt, d.h. in eine dem menschlichen Auge gewohnte Form gebracht. Im Falle, dass die Bilder nur für die Einrichtung 8 zur Sitzbelegungserkennung oder für irgendwelche anderen elektronischen Auswerteeinrichtungen benötigt werden, können die von der Kamera 4 gelieferten Bilder auch auf zylindrische Koordinaten transformiert werden, in denen eine elektronische Auswertung ebenfalls leicht möglich ist.

In besonders vorteilhafter Weise eignet sich das erfindungsgemäße Verfahren zu Verwendung, insbesondere bei Kraftfahrzeugen, in Verbindung mit einer Vorrichtung zum Diebstahlsschutz, einer Alarmanlage oder einer Einrichtung zur Übertragung von Bilddaten. Dabei ist es denkbar die Bilddaten über eine Mobilfunkeinrichtung (Mobiltelefon oder WAP-Internet-Telefon) an den Personen, beispielsweise einen Eigentümer eines Kraftfahrzeuges zu übermitteln.

## Patentansprüche

1. Verfahren zur optischen Überwachung des Innenraums eines Fahrzeugs, **dadurch gekennzeichnet, dass**
- der Fahrzeuginnenraum mittels mindestens einer Rundumsichtkamera (2; 4) beobachtet wird, die Bilder in krummlinigen Koordinaten liefert,
- die von der Rundumsichtkamera (2; 4) erhaltenen Bilder auf zylindrische oder ebene Koordinaten transformiert werden (6), und
- die transformierten Bilder einer elektronischen Bildauswertung (8) unterzogen werden.

2. Verfahren nach Anspruch 1, **dadurch gekennzeichnet, dass** die von der Rundumsichtkamera (2; 4) erhaltenen Bilder mittels mindestens einer Transformationstabelle auf zylindrische oder ebene Koordinaten transformiert werden.

3. Verfahren nach Anspruch 1 oder 2, **dadurch gekennzeichnet, dass** die elektronische Bildauswertung (8) dafür eingerichtet ist, Objekte zu erkennen.

4. Verfahren nach Anspruch 3, **dadurch gekennzeichnet, dass** die zu erkennenden Objekte Personen im Fahrzeuginnenraum umfassen.

5. Verfahren nach Anspruch 4, **dadurch gekennzeichnet, dass** die Anwesenheit von Personen auf den einzelnen Fahrzeugsitzen erkannt wird.

6. Verfahren nach Anspruch 4, **dadurch gekennzeichnet, dass** die Sitzhaltung von Personen im Fahrzeug erkannt wird.

7. Verfahren nach Anspruch 3, **dadurch gekennzeichnet, dass** die zu erkennenden Objekte Gegenstände im Fahrzeuginnenraum umfassen.

8. Verfahren nach einem der Ansprüche 3 bis 7, **dadurch gekennzeichnet, dass** die zu erkennenden Objekte außerdem Personen und/oder Gegenstände im durch die Scheiben des Fahrzeugs hindurch sichtbaren Fahrzeugaußenraum umfassen.

9. Verfahren nach einem der vorhergehenden Ansprüche, **dadurch gekennzeichnet, dass** mindestens eines der transformierten Bilder oder aus der Bildsignalverarbeitung extrahierte Information im Falle eines Fahrzeugunfalls gespeichert und/oder per Funk an eine Rettungsleitstelle übertragen wird.

10. Fahrzeug mit mindestens einer Kamera im Fahrzeuginnenraum, **dadurch gekennzeichnet, dass** die mindestens eine Kamera eine Rundumsichtkamera (2; 4) ist, deren Sichtfeld mindestens den überwiegenden Teil einer Hemisphäre umfasst, die sowohl einen Teil des Fahrzeuginnenraums als auch einen Teil des Fahrzeugaußenraums einschließt.

11. Fahrzeug nach Anspruch 10, **dadurch gekennzeichnet, dass** die Rundumsichtkamera aus einer konventionellen digitalen Kamera (4) und einem konvexen Spiegel (2) besteht, der sich im Sichtfeld der digitalen Kamera befindet.

12. Fahrzeug nach Anspruch 11, **dadurch gekennzeichnet, dass** der konvexe Spiegel (2) in der Nähe des Fahrzeugdachs oder in der Amaturentafel angebracht ist.

13. Fahrzeug nach Anspruch 10, **dadurch gekennzeichnet, dass** im Sichtfeld der Kamera 4 ein Spiegeln 21 angeordnet ist und dass bei der Kamera wenigstens ein konkaver Spiegel 22 angeordnet ist, wobei Kamera 4 und die Spiegel 21 und 22 so angeordnet sind, dass die Kamera 4 über Umlenkung an Spiegel 21 und 22 das Umfeld erfassen kann.

14. Fahrzeug nach einem der Ansprüche 11 bis 13, **dadurch gekennzeichnet, dass** eine Einrichtung (6) zur Transformation der von der Rundumsichtkamera (2; 4) erhaltenen Bilder auf zylindrische oder ebene Koordinaten vorgesehen ist.

15. Fahrzeug nach Anspruch 14, **dadurch gekennzeichnet, dass** außerdem eine Einrichtung (8) zur elektronischen Auswertung der transformierten Bilder vorgesehen ist.

16. Verwendung des Verfahrens nach einem der Ansprüche 1 bis 9 für den Einsatz in Verbindung mit einer Vorrichtung zum Diebstahlsschutz, einer Alarmanlage oder einer Einrichtung zur Übertragung von Bilddaten.
